(19) Europäisches Patentamt

European Patent Office

Office européen des brevets

(11) Numéro de publication: **0 635 806 A1**

## (12) DEMANDE DE BREVET EUROPEEN

(21) Numéro de dépôt: **94202093.4**

(22) Date de dépôt: **18.07.94**

(51) Int. Cl.⁶: **G06T 7/00**, H04N 5/32

(30) Priorité: **22.07.93 FR 9309055**

(43) Date de publication de la demande:
**25.01.95 Bulletin 95/04**

(84) Etats contractants désignés:
**DE FR GB NL**

(71) Demandeur: **LABORATOIRES D'ELECTRONIOUE PHILIPS
22, Avenue Descartes
F-94450 Limeil-Brévannes (FR)**
㊇ **FR**

(71) Demandeur: **PHILIPS ELECTRONICS N.V.
Groenewoudseweg 1
NL-5621 BA Eindhoven (NL)**
㊇ **DE GB NL**

(72) Inventeur: **Makram-Ebeid, Shérif
Société Civile S.P.I.D.,
156, Boulevard Haussmann
F-75008 Paris (FR)**

(74) Mandataire: **Lottin, Claudine
Société Civile S.P.I.D.
156, Boulevard Haussmann
F-75008 Paris (FR)**

(54) **Procédé de traitement d'images numériques pour déterminer localement le centre et la largeur d'objets en forme de rubans contrastant sur un fond.**

(57) Procédé de traitement d'une image numérique comprenant la représentation d'objets en forme de rubans ayant des intensités sensiblement uniformes contrastant sur un fond sensiblement uniforme, ce procédé comprenant au moins une étape d'identification des pixels situés sur les lignes centrales des objets, dite étape de "tracking".

Ce procédé est caractérisé en ce que cette étape comprend une première opération de filtrage menée à bien en appliquant sur chaque image une série de N filtres sélectifs bidimensionnels récursifs passe-bas, à support losange, dont une des directions principales est orientée régulièrement dans le plan de l'image de $\pi/N$ en $\pi/N$, pour déterminer la direction de chaque tronçon d'objet en forme de rubans comme celle où la réponse d'un des filtres est maximale.

Application : Systèmes d'angiographies numérisées

EP 0 635 806 A1

FIG.7A   FIG.7B   FIG.7C

FIG.7D   FIG.7E   FIG.7F

FIG.7G   FIG.7H   FIG.7I

L'invention concerne un procédé de traitement d'une image numérique comportant la représentation d'objets en forme de rubans ayant des intensités sensiblement uniformes contrastant sur un fond sensiblement uniforme, ce procédé comprenant au moins une étape d'identification des pixels situés sur les lignes centrales des objets, dite étape de "tracking".

L'invention trouve son application dans la détermination des contours de tout objet en forme de ruban, représenté dans une image numérique, qui montre un contraste vis-à-vis d'un fond sensiblement uniforme.

L'invention trouve par exemple son application dans le domaine des systèmes de formation d'images numérisées, pour aider à la détection d'anomalies telles que des sténoses à partir d'angiographies du corps humain ou animal.

Les angiographies sont des images spécialisées, pour la visualisation des vaisseaux sanguins. Plusieurs types d'angiographies sont réalisables : les angiographies coronariennes, pour la visualisation des artères irriguant le muscle du coeur, ou myocarde, l'ensemble de ces artères formant l'arbre coronarien ; les angiographies périphériques pour visualiser l'irrigation des membres inférieurs et supérieurs ; les angiographies cérébrales. On s'intéressera ci-après à titre d'exemple aux angiographies coronariennes. Les sténoses sont des rétrécissements locaux provoqués par des obstructions partielles ou totales qui apparaissent sur des artères. Dans le cas de l'arbre coronarien, les sténoses compromettent gravement l'irrigation du myocarde et doivent être détectées par un praticien à partir des angiographies.

L'introduction, ces dernières années, de la radiographie numérisée, qui combine l'utilisation d'un détecteur de rayons X donnant une image en temps réel et la numérisation des images, a constitué un progrès majeur dans le domaine de la formation d'images, par rapport à la radiographie conventionnelle. Elle donne en effet accès aux nombreuses possibilités offertes par les techniques de traitement numérique d'images.

D'autres méthodes de formation d'images angiographiques sont également connues, telles que les méthodes utilisant la résonance magnétique nucléaire.

Dans tous les cas, l'invention ne tient pas compte de la méthode par laquelle l'image numérique a été obtenue, ni de la nature des objets qu'elle représente, mais concerne seulement le traitement de cette image numérique pour déterminer les points centraux et les points des bords des objets représentés, pourvu que ces objets constituent des masses suffisamment uniformes contrastant sur un fond suffisamment uniforme.

Un procédé d'identification automatisé des contours de vaisseaux dans des angiographies coronariennes est connu de la publication intitulée "Automated Identification of Vessel Contours in Coronary Arteriograms by an adaptive Tracking Algorithm", par Ying SUN, dans IEEE Transactions on Medical Imaging, Vol.8, N°1, March 1989. Ce document décrit un algorithme de "suivi du tracé" dit "tracking" de la ligne centrale des vaisseaux, pour l'identification ultérieure des contours de ces vaisseaux dans des angiographies numérisées. L'algorithme comprend essentiellement trois étapes qui sont :

1°) L'identification des points situés sur la ligne centrale d'un vaisseau. Chaque point de la ligne centrale a trois attributs : sa position, la direction d'un vecteur parallèle à la direction du tronçon de vaisseau auquel appartient le point, la demi-largeur du vaisseau en ce point. Une fois donné un point $P_k$ de départ sur la ligne centrale du vaisseau, l'algorithme calcule un point $\tilde{P}_{k+d}$ à une distance donnée d dans la direction du vecteur attribut du point de départ $P_k$. Ensuite un filtrage convolutif est effectué au moyen d'un filtre rectangulaire d'orientation principale perpendiculaire audit vecteur, c'est-à-dire parallèle à la direction de balayage au point de départ $P_k$.

Ce filtrage permet d'identifier un point $P'_{k+d}$, déterminé en effectuant la convolution entre le profil de densité réel le long de la ligne de balayage passant par le point $\tilde{P}_{k+d}$, et un profil de densité idéal de forme rectangulaire. Le résultat de la convolution fournit un vecteur dont on cherche la valeur maximale, laquelle est relative à un pixel qui correspond au maximum du profil de l'intensité et permet la mise à jour du nouveau point central $P'_{k+d}$.

2°) L'identification des bords du vaisseau : les bords du vaisseau correspondant au nouveau point central $P'_{k+d}$ sont identifiés comme la position des points d'inflexion sur un profil de l'intensité transversal, c'est-à-dire perpendiculairement à un vecteur attribut du point $P'_{k+d}$ résultant d'une mise à jour. La demi-largeur du vaisseau est alors aussi mise à jour, puis le nouveau point central définitif $P_{k+d}$ de la ligne de centre recherché est enfin identifié à partir de ces bords.

Le procédé est répété pour tous les points situés sur des lignes de balayage perpendiculaires au premier vecteur attribut du point de départ $P_k$, de k+1 à k+d. Ce vecteur de direction est maintenu le même sur toute la distance d. La direction de balayage change chaque fois que le vecteur direction change.

Dans le cas d'une bifurcation, le procédé choisit la branche de vaisseau qui a l'intensité la plus grande, pour que le profil d'intensité mis à jour ne montre plus de double pic.

EP 0 635 806 A1

3°) Moyennage spatial : ce procédé de "suivi de tracé" ou "tracking" génère une description du vaisseau en N entrées. Chaque entrée est caractérisé par un triplet = position d'un point sur la ligne de centre du vaisseau ; direction d'un vecteur parallèle à la ligne de centre dans un tronçon de longueur d choisie en fonction de la courbure du vaisseau ; demi-largeur du vaisseau en ce point.

Un premier problème technique qui se pose dans le traitement d'image des angiographies est la détection de toutes les situations pathologiques, et l'élimination des fausses alarmes.

Les situations pathologiques, contrairement à ce qui est indiqué dans le document cité, ne comprennent pas uniquement les sténoses qui apparaissent sous la forme d'un rétrécissement local dans un vaisseau, lequel montre donc simplement un minimum local de largeur. Les situations pathologiques comprennent aussi un type de rétrécissement dits "en marche d'escalier" qui apparaît sur un vaisseau d'une première largeur sensiblement uniforme, par le passage abrupte à une seconde largeur inférieure à la première. Ce genre de "marche d'escalier" peut signifier que l'on a affaire à un vaisseau dit principal, d'une première largeur, qui se divisait en deux vaisseaux dont l'un, de la seconde largeur, est toujours visible dans le prolongement du vaisseau principal, mais dont l'autre est maintenant complètement occlus à partir de son embranchement avec le vaisseau principal et a désormais disparu, étant devenu complètement invisible sur l'angiographie.

L'unique moyen de détecter ce vaisseau complètement occlus et désormais invisible, est de détecter le rétrécissement en "marche d'escalier" sur le vaisseau principal.

Cette dernière situation pathologique ne peut pas être reconnue par l'algorithme décrit dans l'état de la technique cité : ceci parce que le "suivi du tracé" ou "tracking" du vaisseau est prévu pour suivre le tracé du vaisseau principal et éliminer celui de vaisseaux secondaires. Ainsi, le procédé connu est incapable de distinguer le cas où il apparaît une "marche d'escalier" dû au fait qu'à l'embranchement l'un des deux vaisseaux secondaires a complètement disparu qui est un cas pathologique grave, du cas non pathologique où les deux vaisseaux secondaires sont toujours présents à l'embranchement. Comme la forme caractéristique en "marche d'escalier" est l'unique alarme permettant au praticien de déceler les vaisseaux occlus, ce type d'algorithme n'offre pas au praticien la possibilité de détecter ces situations pathologiques qui sont à la fois importantes en nombre et en gravité regardant l'état du patient.

Un second problème technique qui se pose est la réalisation d'appareils de radiologie munis de moyens pour la détection totalement automatique des situations pathologiques décrites plus haut, à savoir la première situation de rétrécissement local de vaisseaux, et la seconde situation de rétrécissement en "marche d'escalier". Par détection totalement automatique, on entend que la mise en évidence des situations pathologiques doit être réalisée sans l'aide d'un opérateur.

La réalisation d'angiographies suppose qu'un patient, en général éveillé, se voit injecter, par exemple par l'artère fémorale au moyen d'un cathéter, un produit contrastant ; puis un opérateur réalise une série de radiographies de l'arbre coronarien sous la forme d'une séquence d'images vidéo à raison de 30 images par seconde, par exemple. Une telle séquence permet ainsi de visualiser plusieurs cycles cardiaques. Les sténoses ou rétrécissements décrits plus haut sont les principales anomalités à détecter. Mais cette détection peut être rendue difficile en raison d'une orientation peu favorable des vaisseaux, ou du passage d'un vaisseau en arrière-plan derrière un vaisseau situé en premier plan. Il est donc nécessaire d'exploiter différents angles de projection et aussi de tenter de détecter les sténoses dans toutes les images de la séquence vidéo pour lesquelles la concentration du produit constrastant est suffisamment forte pour assurer une bonne visibilité des vaisseaux.

Les clichés sont donc assez nombreux, et le praticien établit son diagnostic en faisant défiler ces images lentement devant ses yeux. Il apparaît alors un besoin pour mettre en évidence à l'avance et de manière automatique les situations pathologiques dont on a parlé plus haut. En effet, le praticien a tendance, psychologiquement, à voir son attention attirée par les situations pathologiques les plus flagrantes, et à laisser passer certaines situations moins visibles, mais qui peuvent être plus gênantes, ou plus graves, cliniquement, pour l'avenir du patient. Ou bien le praticien peut laisser passer certaines situations pathologiques parce qu'elles n'apparaissent que dans une seule image, ou dans peu d'images de la séquence.

Il est donc important que le praticien puisse disposer d'un système de mise en évidence des situations pathologiques de manière à attirer son attention sur les endroits des images, ou les endroits de l'unique ou des quelques images de la séquence qui contiennent en fait les informations les plus intéressantes, qu'il est indispensable d'examiner. Son attention pourra ainsi être attirée sur les endroits les moins vraisemblables a priori, mais qui contiennent néanmoins des situations pathologiques ; et par ailleurs, son attention pourra être détournée de se focaliser sur quelques sténoses évidentes mais sans grande importance sur le plan des suites médicales.

4

Une telle automatisation totale de la détection des situations pathologiques ne peut être mise en oeuvre que si, préalablement :

- on réussit à rendre automatique la détection de la position des objets dans l'image numérique, par exemple par la détermination de la position de leurs points de centres,
- on réussit en outre à rendre automatique la détection de la position de leurs bords, ou de leurs contours, par exemple par la détermination de leur demi-largeur dans une direction donnée, à partir du point de centre correspondant.

Une telle automatisaion de la détermination des lignes de centres et des lignes de contours conduit à pouvoir ultérieurement rendre automatique la détection de toute anomalie portant sur les dimensions ou la forme des objets dans l'image numérique.

Une telle automatisation totale de la détection des situations pathologiques ne peut être obtenue si l'on utilise l'algorithme connu du document cité.

La raison principale conduisant à cet inconvénient est que cet algorithme connu du document cité n'est pas assez robuste pour être lui-même totalement automatisable. Le manque de robustesse est dû au fait que l'algorithme détermine les points de la ligne de centre de vaisseau par des approximations successives à partir d'un point de départ, et parce qu'il utilise des profils de densité d'images bruitées. Des erreurs peuvent ainsi s'accumuler, ce qui est un inconvénient lorsqu'un automatisme poussé est envisagé.

Il en résulte que, dû à ce manque de robustesse, cet algorithme a besoin d'être guidé. En effet, ou bien cet algorithme peut conduire à suivre des chemins qui ne sont pas des vaisseaux : il peut s'égarer. Ou bien il conduit à laisser de côté des chemins intéressants. Il faut alors le remettre sur le chemin que l'on veut réellement suivre.

Ainsi, dans le cas où une bifurcation apparaît lors du suivi du tracé d'un vaisseau, l'algorithme connu est prévu pour suivre la branche qui montre l'intensité la plus grande, éliminant ainsi le suivi du tracé du vaisseau secondaire, car cet algorithme connu ne peut se permettre de traiter le problème qui apparaît lorsque le profil d'intensité montre un double pic. L'examen des vaisseaux secondaires doit donc se faire en repositionnant le "point de départ" de l' algorithme à l'endroit de l'embranchement, sur le vaisseau secondaire abandonné lors d'un premier passage, pour effectuer maintenant les étapes de l'algorithme en suivant ce vaisseau secondaire. Pour suivre l'ensemble des vaisseaux d'une région vitale considérée, l'algorithme connu a donc, pour cette raison besoin d'être guidé, et n'est donc pas totalement automatisable.

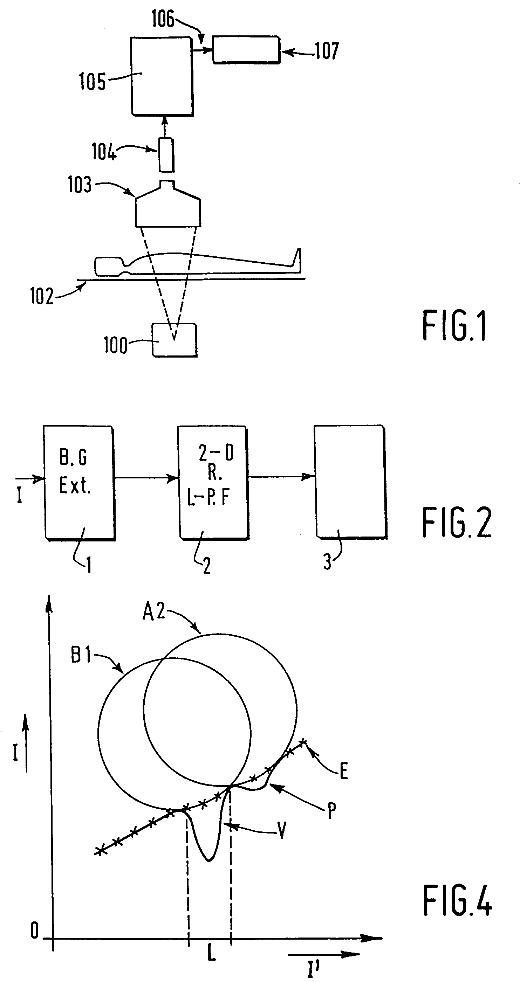

On notera que, en référence avec la FIG.2 du document cité, un profil d'intensité idéal, de forme rectangulaire, est utilisé pour réaliser une convolution avec le profil d'intensité obtenu par balayage transversal du vaisseau étudié, afin de déterminer un vecteur dont on cherche la valeur maximale, laquelle est relative au pixel correspondant au maximum du profil d'intensité mesuré. Ce pixel est retenu comme point de la ligne de centre mis à jour. Pour effectuer cette opération, la largeur du profil idéal rectangulaire est fixée A PRIORI. La largeur réelle du vaisseau n'est pas déterminable lors de cette étape de l'algorithme.

La détermination de la largeur des vaisseaux est réalisée dans une étape ultérieure, en identifiant les bords du vaisseau comme les points d'inflexion de part et d'autre du maximum du profil d'intensité transversal mesuré du vaisseau. Cette étape donne une mise à jour de la largeur locale du vaisseau qui sera utilisée pour déterminer la largeur du profil idéal rectangulaire utilisé dans la détermination du point de centre suivant lors d'une étape ultérieure.

La présente invention a pour but de fournir un procédé pour déterminer, dans une image numérique comportant la représentation d'objets en forme de rubans sensiblement uniformes contrastant sur un fond sensiblement uniforme, les points centraux et les lignes centrales, ou médianes, composées de ces points, ainsi que les largeurs locales de sections des objets dans des directions localement perpendiculaires à ces lignes centrales.

La présente invention a aussi particulièrement pour but de déterminer ainsi les points de centre et les points des bords de tout objet en forme de rubans, et donc d'objets qui ne sont pas nécessairement les branches de vaisseaux sanguins mais qui peuvent être des objets quelconques d'une image numérique répondant aux conditions de forme et de contraste.

La présente invention a particulièrement pour but de fournir une telle méthode qui soit robuste, c'est-à-dire dont la détermination d'un point ne dépende pas de la détermination d'un point précédent suivie d'une approximation.

La présente invention a aussi pour but de fournir une telle méthode qui n'ait pas besoin d'être guidée, c'est-à-dire à qui l'on n'est pas besoin d'imposer des points de départ, ou à qui l'on n'a pas besoin d'imposer une zone de recherche particulière.

La présente invention a aussi pour but de fournir une méthode capable de travailler à toute résolution, et qui permette la détermination de la largeur d'un objet quelle que soit la largeur déterminée lors d'une étape antérieure.

La présente invention a particulièrement pour but de fournir une telle méthode qui soit complètement automatisable.

Selon l'invention ce but est atteint au moyen d'un procédé défini dans le préambule et caractérisé en ce que cette étape comprend une première opération de filtrage menée à bien en appliquant sur chaque image une série de N filtres sélectifs bidimensionnels récursifs passe-bas, à support losange, dont une des directions principales est orientée régulièrement dans le plan de l'image de $\pi/N$ en $\pi/N$, pour déterminer la direction de chaque tronçon d'objet en forme de ruban comme celle où la réponse d'un des filtres est maximale.

L'invention a aussi pour but de fournir un procédé capable de fournir la direction de chaque tronçon d'objet avec une précision aussi grande que possible.

Selon l'invention ce but est atteint au moyen de ce procédé en outre caractérisé en ce que, pour améliorer la sélectivité du filtrage précédent, l'étape de tracking comprend une seconde opération menée à bien en soustrayant, à l'intensité de chaque pixel, une fraction de l'intensité d'un pixel situé à une distance donnée transversalement à sa gauche par rapport à la direction principale du filtre passe-bas précédent et une même fraction de l'intensité d'un pixel situé à la même distance à sa droite, ces première et seconde opérations étant équivalentes à l'application sur chaque image, d'une série de N filtres bidimensionnels Laplaciens de mêmes directions principales que les N filtres récursifs passe-bas précédents.

La présente invention a tout particulièrement pour but de fournir une localisation précise des points de centre des objets en forme de rubans.

Ce but est atteint au moyen de ce procédé en outre caractérisé en ce que l'étape de "tracking" comprend une troisième opération d'identification des points des lignes centrales des objets en forme de ruban par la détermination des maxima locaux de réponse en intensité des filtres, transversalement aux directions des objets déterminées par les filtrages des deux premières opérations.

L'invention est décrite ci-après en détail en référence avec les FIG. schématiques annexées, parmi lesquelles :

- la FIG.1 représente un système de radiographie numérique ;
- la FIG.2 représente un diagramme de blocs fonctionnels correspondant aux différentes étapes de l'invention ;
- la FIG. 3A représente une image numérique angiographique ayant subi un premier traitement d'extraction du fond ; et la FIG.3B représente une image numérique angiographique ayant subi les étapes de traitement pour fournir le squelette des vaisseaux formé de tous les points de centre des vaisseaux ;
- la FIG.4 illustre un procédé de morphologie mathématique mis en oeuvre dans une première étape de l'invention pour l'extraction du fond ;
- la FIG.5A représente un noyau de convolution d'un filtre mathématique récursif dans un passage causal ;
- la FIG. 5B représente un noyau de convolution d'un filtre mathématique récursif passe-bas monodimensionnel obtenu par le passage causal et anticausal du filtre de la FIG.5A ;
- la FIG.5C représente un noyau de convolution d'un filtre mathématique Laplacien monodimensionnel ;
- la FIG.6A représente en perspective un noyau de convolution d'un filtre mathématique récursif passe-bas bidimensionnel à base de losange ;
- la FIG.6B représente en perspective un noyau de convolution d'un filtre mathématique Laplacien bimensionnel d'axes parallèles à celui du filtre de la FIG.6A ;
- la FIG.7 représente différentes orientations possibles des axes des filtres bidimensionnels passe-bas, dans le plan de l'image ;
- les FIG. 8A et 8B représentent, pour une même orientation donnée, le noyau de convolution du filtre récursif passe-bas et du filtre Laplacien qui en est dérivé ;
- les FIG. 9A et 9B illustrent le résultat du filtrage d'une image numérique telle que celle de la FIG. 3A, au moyen de filtres tels que ceux des FIG.7C et 7E respectivement, pour d'abord définir les portions de vaisseaux ayant localement même orientation que chacun de ces filtres respectivement, et déterminer les points de centre de ces portions de vaisseaux ayant localement ladite orientation, ce qui permet ensuite de déterminer la largeur de ces portions de vaisseaux perpendiculairement à cette orientation ;
- la FIG. 10 montre le résultat des trois étapes de traitement selon l'invention appliquées à une image angiographique numérique, ce résultat consistant en un regroupement sur une même image numérique des largeurs de vaisseaux déterminées préalablement pour chacun des tronçons localement parallèles aux directions des filtres de la FIG.7.

Dans un exemple d'application de l'invention, en référence avec la FIG. 1, un système de radiographie numérisée comprend un générateur 100 de rayons X : une table mobile 102 pour recevoir un patient ; un dispositif intensificateur d'image 103 couplé à un tube vidéo 104, qui fournit des données à un système 105 de traitement numérique d'image comprenant un microprocesseur. Ce dernier comprend plusieurs sorties dont une sortie 106 couplée à un moniteur 107 pour la visualisation de l'image radiographique.

L'image numérisée radiographique, ou obtenue par un autre moyen, peut contenir 512 x 512 pixels, ou 1024 x 1024 pixels par exemple, codés par exemple sur 8 niveaux de gris, ou niveaux d'intensité, le niveau d'intensité le plus bas correspondant aux régions les plus sombres.

L'invention propose un procédé de traitement d'images numériques dont les différentes étapes sont représentées sous forme de blocs fonctionnels sur le diagramme de la FIG.2.

En référence avec la FIG. 2, le procédé de traitement d'image comprend les étapes suivantes :

### ETAPE 1 : Soustraction du fond

Cette étape correspond au bloc fonctionnel 1 du diagramme de la FIG.2.

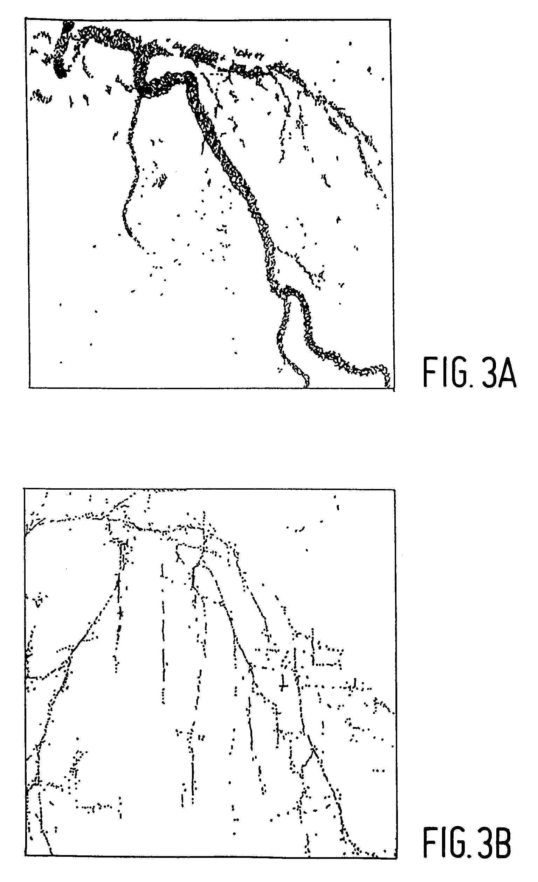

Pour chaque image de la séquence, on effectue une compression logarithmique de l'échelle des intensités. Les intensités des pixels ainsi transformées deviennent proportionnelles à l'absorption des rayons X par les objets de l'image. Les vaisseaux apparaissent comme des structures sombres sur un fond plus clair. On extrait le fond de l'image à l'aide d'une opération de fermeture morphologique (notée B.G. Ext. sur la FIG. 2) en utilisant un élément structurant à trois dimensions. Plus explicitement, une région de l'image est considérée comme faisant partie du fond soit parce que son intensité varie très lentement dans l'espace, soit parce que les objets de petite taille qui s'y trouvent ont un constraste inversé par rapport à celui des vaisseaux (c'est-à-dire clair sur fond sombre). On soustrait algébriquement de l'image le fond ainsi évalué, pour obtenir une nouvelle image où le contraste des vaisseaux est fortement réhaussé. On réduit ensuite le bruit subsistant dans le fond de l'image à l'aide par exemple d'une opération de seuillage dynamique, ce qui permet d'obtenir une image telle que celle de la FIG.3A.

Au sujet de l'opération de fermeture morphologique en utilisant un élément structurant, l'homme du métier lira avec profit la publication intitulée "Optimization of Morphological Structuring Elements for Angiogram Enhancement" par Keith M. ANDRESS et David L.WILSON, dans SPIE, Vol.1445 Image processing, 1991, pp.6-10.

Pour mettre en oeuvre la soustraction du fond de l'image par morphologie mathématique, on construit "un masque" pour éliminer les éléments du fond en déterminant l'enveloppe supérieure des profils d'intensité dans l'image.

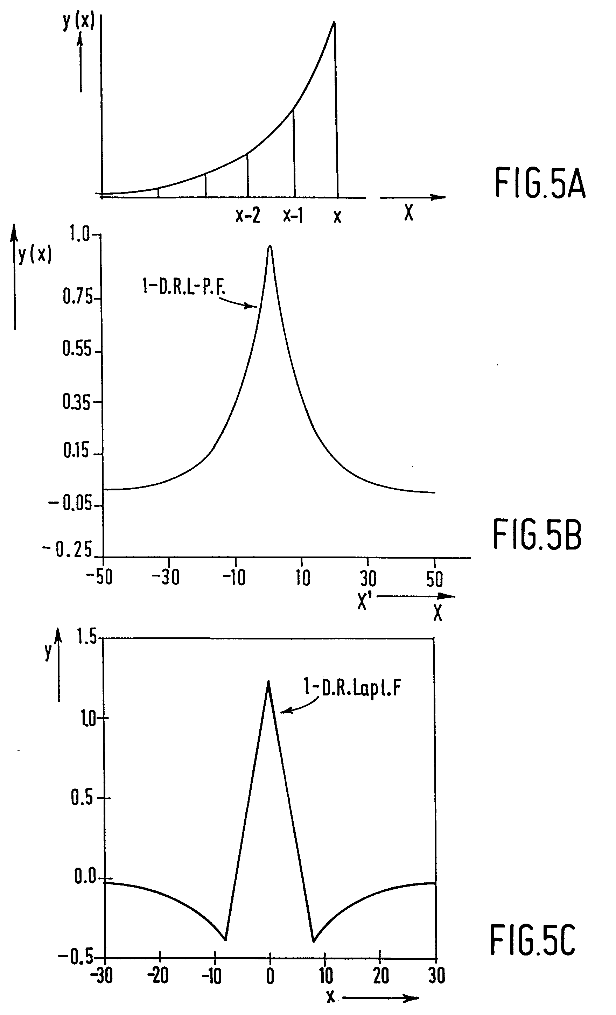

La FIG.4 montre un profil d'intensité obtenu en balayant une ligne ou bien une colonne de l'image. Dans cette figure, le profil P représente l'intensité I en fonction de la distance D en pixels sur l'image, dans la région d'un vaisseau V.

Dans l'image numérique, à la transition vaisseau/fond, l'intensité des pixels varie brusquement de faible (vaisseaux en noir) à forte (fond clair), alors que, dans le fond, ou bien l'intensité varie lentement, ou bien les éléments ont un contraste inversé par rapport à la transition vaisseau/fond, c'est-à-dire sont plus clairs que la moyenne du fond. De plus, le vaisseau V représente un objet de largeur L relativement faible dans l'image. Le traitement mathématique consiste à passer un élément en forme de sphère B, de la position $B_1$ vers la position $B_2$, sur les courbes P d'intensités I, cette sphère B ayant un diamètre supérieur à la largeur L des vaisseaux, de manière à déterminer le lieu géométrique des points E les plus bas de la sphère B pour l'ensemble des positions où la sphère B est tangente aux profils d'intensité P. Ce lieu géométrique est appelé fermeture morphologique de l'image. Il représente une estimation du fond, c'est-à-dire de l'image sans les vaisseaux. On applique ensuite un traitement mathématique qui consiste à extraire de l'image originale les points situés dans le fond ainsi évalué.

A la suite de cette première étape, réalisée dans le bloc fonctionnel 1 de la FIG. 2, l'image ne contient plus en principe que le seul arbre coronarien, tel que montré sur la FIG.3A.

Toute autre méthode d'extraction du fond pour laisser apparaître sur l'image numérique les objets à étudier, constrastant sur un fond sensiblement uniforme, peut être choisie par l'homme du métier.

Le procédé de traitement d'images numériques selon l'invention comprend, à partir de là, les étapes fondamentales qui sont, dans l'ordre : l'estimation robuste des points des lignes centrales des vaisseaux au moyen de filtres récursifs, adaptatifs et orientés : la détermination des bords des vaisseaux à partir de la connaissance robuste des points des lignes centrales.

L'ensemble du procédé de traitement d'images numériques selon l'invention a pour objet l'automatisation complète de ces opérations.

### ETAPE 2 - Estimation des points des lignes centrales des vaisseaux (Tracking)

### Phase 1 : Détermination des orientations locales des vaisseaux

Cette ETAPE 2 dans une première phase conduit à la détection des tronçons des vaisseaux ayant chacun localement une orientation spécifique déterminée. Le "découpage" des vaisseaux en tronçons parallèles à ces directions prédéterminées permettra ensuite, dans une deuxième phase, la détermination robuste des coordonnées des points ou pixels localisés sur les lignes centrales ou médianes des vaisseaux, ces lignes formant ce que l'homme du métier appelle le squelette de l'arbre coronarien.

Cette ETAPE 2, représentée par le bloc 2 de la FIG.2, comprend donc une première phase de traitement, laquelle comprend elle-même deux opérations ou procédures de calcul.

La première opération est menée à bien par le passage sur l'image, à l'issue de l'ETAPE 1 précédente d'extraction du fond, d'une série de filtres mathématiques récursifs, adaptatifs et orientés (2-D.R.L-P.F sur la FIG.2).

Le choix de ces filtres orientés permet de résoudre un des problèmes annexes au traitement des images angiographiques numérisées, qui réside dans le fait que les calculs doivent être réalisés très rapidement d'une part, et en mettant en oeuvre des moyens informatiques assez standards, pour fournir un outil qui soit à la fois économique et performant.

Par filtre récursif, on entend un filtre de convolution numérique évalué par exemple sur une ligne de l'image, la réponse d'un point donné (x-1) de cette ligne servant à évaluer celle du point suivant (x) selon une équation de la forme :

$$y^t(x) = y^{t-1}(x) + \alpha\, [y^t(x\text{-}1) - y^{t-1}(x)] \qquad 1)$$

En référence avec la FIG. 5A, qui illustre comment cette fonction récursive est mise à jour, à chaque instant, le passage de la fonction de filtrage sur l'image numérisée, selon des lignes de balayage, met à jour une courbe $y^t(x)$. Dans la représentation de cette courbe, y est l'intensité du pixel codé en niveaux d'intensité, c'est-à-dire dans le cas présent en niveaux de gris, $y^0(x)$ est l'intensité initiale du pixel courant d'abscisse x sur la ligne de balayage, $y^{t-1}(x)$ est l'intensité du pixel courant d'abscisse x à la mise à jour précédente, c'est-à-dire la (t-1)ième mise à jour, et $y^t(x\text{-}1)$ représente l'intensité du pixel précédent le pixel x, à sa gauche si le balayage est causal, c'est-à-dire de gauche à droite, et à la (t)ième mise à jour. Dans cette équation, $\alpha$ est un coefficient compris entre 0 et 1 ($0 < \alpha < 1$).

Cette fonction $y^t(x)$ donne donc la valeur de l'intensité du pixel courant d'abscisse x à l'instant t comme la somme de l'intensité de ce même pixel à l'itération précédente (t-1) et d'un terme donné par le produit d'un coefficient $\alpha$ par la différence de l'intensité du pixel voisin à gauche d'abscisse (x-1) à l'instant t et de l'intensité du pixel courant d'abscisse x à l'itération précédente (t-1).

On initialise cette fonction par la valeur initiale de l'intensité du pixel courant x appelée $y^0$, et on fait la première mise à jour :

$$y^1(x) = y^0(x) + \alpha[y^1(x\text{-}1) - y^0(x)] \qquad 1bis)$$

où $\alpha$ multiplie un terme qui représente l'intensité du pixel voisin à gauche (sens causal) à l'instant 1, moins l'intensité du point courant à l'itération précédente.

On réalise ainsi un noyau de convolution. Lors de chaque itération, on calcule l'intensité du point courant en prenant en compte le passé pondéré par un poids chaque fois différent.

Mathématiquement l'équation 1) peut se mettre sous la forme de l'équation 2) suivante :

$$y^1(x) = (1-d)\sum_{n=0}^{\infty} \alpha\, y^0(x-n)\ldots \qquad 2)$$

En écrivant la relation suivante 3 :

$$\alpha = \exp(-1/\tau) \qquad 3)$$

et dans la limite d'une grande valeur du paramètre $\tau$, l'équation 2) s'écrit sous la forme d'une convolution :

$$y^1(x) = (1/\tau) \int_0^\infty \exp(-u/\tau) \, y^0(x-u) \, du \qquad \text{2bis)}$$

où u est la distance à partir du point courant x.

Un filtre récursif présente l'avantage sur un filtre non récursif de nécessiter beaucoup moins de calculs. Pour donner un exemple, si l'on effectuait un filtrage simple sur un support de 25 x 25 pixels, il faudrait effectuer 625 multiplications pour déterminer l'intensité de chaque pixel de l'image filtrée.

Dans le cas du filtre récursif défini plus haut, l'expression 2bis) montre que l'on effectue simplement une seule multiplication pour obtenir la nouvelle intensité de chaque pixel de l'image filtrée.

Un autre intérêt de ce filtre récursif défini par les relations 2bis) et 3) est que si, après avoir passé ce filtre sur l'image parallèlement à l'axe des abscisses dans le sens dit causal, on passe ce filtre toujours parallèlement à l'axe des abscisses mais en sens contraire, dit anticausal, on obtient un noyau de convolution ayant la forme de la courbe de la FIG.5B. La fonction correspondante est donnée par la relation 2ter) :

$$y^t(x) = (1/2\tau) \int_{-\infty}^{+\infty} \exp(-|u|/\tau) \, y^0(x-u) \, du \qquad \text{2ter)}$$

De cette manière, le passage, selon l'axe de balayage X'X causal et anticausal du filtre monodimensionnel récursif correspondant au noyau de convolution représenté par la fonction 2ter), permet de réaliser un filtre passe-bas noté 1-D.R.L-P.F (de l'anglais : One-Dimension Recursive Low-Pass Filter) extrêmement sélectif.

La largeur de bande passante du filtre est réglée par la constante $\tau$ qui est ici non pas précisément une constante de temps mais une constante de longueur puisqu'elle règle la largeur du filtre sur l'axe des abscisses (X) ou axe de balayage de l'image formée de pixels. Donc ce filtre récursif peut être rendu adaptatif puisque l'on peut régler cette constante de longueur.

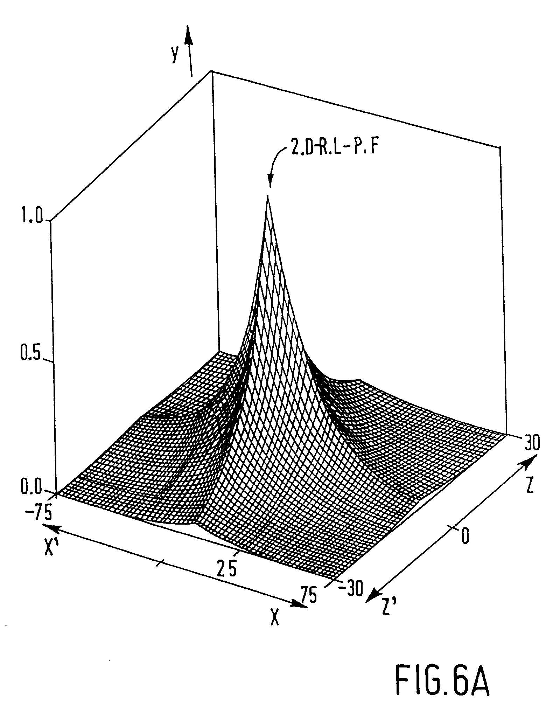

Ce filtre monodimensionnel permet, en réalisant ultérieurement deux autres passages, l'un causal, l'autre anticausal, maintenant selon un axe Z'Z, perpendiculaire à la direction initiale de balayage, qui était notée X'X, de réaliser un filtre bidimensionnel noté 2-D.R.L-P.F (de l'anglais : Bidimensional Recursive Low-Pass Filter), dont la réponse impulsionnelle est représentée en perspective à 3 dimensions, sur la FIG.6A. La troisième dimension est celle de l'intensité y. On réalise ainsi un filtre ayant un noyau de convolution bidimensionnel. Pour le réaliser, il suffit d'initialiser les lignes de l'image numérisée, et les colonnes de cette image, avec les intensités initiales de chaque pixel. Puis on balayage l'image entière parallèlement aux lignes une fois dans le sens causal, et une fois dans le sens anticausal. (D'où 2 multiplications par points). Ensuite on balayage l'image entière parallèlement aux colonnes, une fois dans le sens dit causal, une fois dans le sens anticausal. (D'où 2 autres multiplications par point). Le mot causal signifie ici le sens des abscisses ou ordonnées croissantes et le mot anticausal signifie le sens contraire sur ces axes de coordonnées.

Le filtre bidimensionnel ainsi réalisé présente de grands avantages. Il ressort d'abord de ce qui a été dit précédemment que, pour effectuer ce filtrage, on réalise maintenant seulement 4 multiplications pour calculer une nouvelle intensité en chaque point de l'image. Ce qui correspond à une énorme économie de calculs comparé à ce qui serait nécessaire si on utilisait un filtre non récursif (par ex. 625 multiplications par point).

Ensuite ce filtre peut être extrêmement sélectif, comme il apparaît sur la FIG.6A.

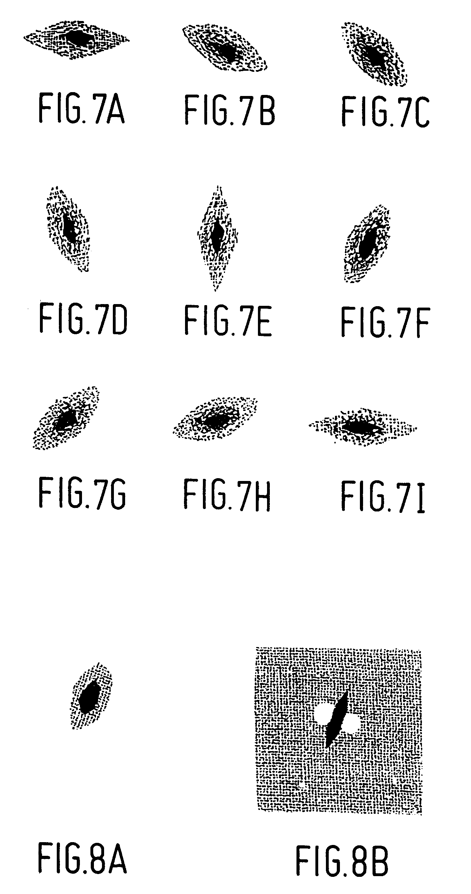

Il ressort également de ce qui a été dit précédemment que, dans le noyau bidimensionnel, on peut choisir une valeur de la constante de longueur $\tau$ différente pour les passages parallèles à l'axe des abscisses X'X, et pour les passages parallèles à l'axe des ordonnées Z'Z. On augmente ainsi le support du filtre dans une direction dite direction principale du filtre. La projection sur le plan de l'image de la fonction tridimensionnelle de la FIG.6A est alors un losange d'axes X'X et Z'Z, tel que représenté sur la FIG.7A, ayant pour grand axe le grand support, par exemple X'X, et pour petit axe le petit support du filtre, ici Z'Z.

Il apparaît que ce filtre bidimensionnel, ayant un support en forme de losange, est particulièrement adapté à convoluer l'image d'un vaisseau donné, formé initialement d'une bande sombre sur fond clair, et disposé parallèlement au grand axe du losange, en une ligne de points situés sur la ligne centrale ou médiane du vaisseau.

Ainsi, en effectuant un balayage d'une image numérique telle que celle de la FIG.3A, au moyen d'un filtre tel que décrit précédemment en référence avec la FIG.7A, ce balayage étant effectué d'une part parallèlement au grand axe du filtre, et d'autre part perpendiculairement, on pourra constater que :
- au passage sur tout tronçon de vaisseau qui est parallèle au grand axe du filtre, ce dernier montre :
  * une forte réponse en intensité lors du balayage de l'image parallèlement à sa direction principale,
  * une forte sélectivité lors du balayage de l'image perpendiculairement à sa direction principale,
- au passage sur tout tronçon non parallèle à la direction principale du filtre, ce dernier montre une réponse en intensité faible et une faible sélectivité.

Il en résulte que l'on peut détecter par des balayages parallèles puis perpendiculaires au grand axe du filtre, toutes les portions de vaisseaux localement parallèles à la direction principale de ce filtre qui sont contenues dans une iamge telle que celle de la FIG.3A.

Pour augmenter encore la précision de la détection, on peut effectuer un autre filtrage au moyen d'un noyau de convolution ayant par exemple la forme du Laplacien représenté sur la FIG.5A, noté 1-D.R. Lapl.F (de l'anglais : One-Dimensional Recursive Laplacian Filter), qui a pour particularité de soustraire les composantes continues. Ce filtre Laplacien n'est pas un filtre différent du filtre passe-bas décrit plus haut, ni un filtre supplémentaire.

C'est un filtre que l'on déduit du filtre passe-bas précédent dans une deuxième opération, ou deuxième procédure de calcul, de cette Phase 1 de l'ETAPE 2. Dans cette deuxième opération, on calcule une nouvelle valeur de l'intensité des pixels, en prenant l'intensité calculée au moyen du filtre monodimensionnel décrit en référence avec la FIG.5B pour chaque pixel, dit dans ce cas pixel central, et en soustrayant une fraction, par exemple la moitié, de l'intensité d'un pixel à une certaine distance transversalement à droite et la même fraction, par exemple la moitié de l'intensité d'un pixel symétrique à la même distance transversalement à gauche de ce pixel central, le balayage étant fait parallèlement à l'axe X'X du filtre bidimensionnel passe-bas, c'est-à-dire parallèlement à son grand axe.

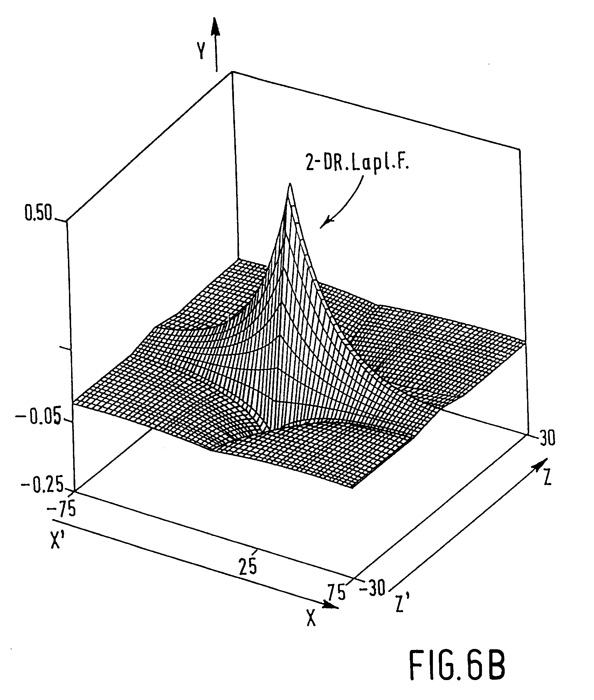

On réalise ainsi le filtre à noyau Laplacien recherché, tel que représenté sur la FIG.6B, bidimensionnel, noté 2-D.Lapl.R.F. (de l'anglais : Two-Dimension Laplacian Recursive Filter) du fait que l'on effectue ces opérations dans chacune des directions de passage du filtre passe-bas, c'est-à-dire d'abord X'X causale et anticausale, puis Z'Z causale et anticausale. Donc, en ayant effectué une première opération de filtrage par un filtre récursif passe-bas du type représenté sur la FIG.6A, puis en ayant effectué une seconde opération de calcul où l'on retranche à l'intensité de chaque pixel une fraction ou la moitié de celle de voisins dans une direction transversale, on obtient une réponse qui est équivalente à la réponse que l'on aurait obtenue en filtrant directement l'image avec le filtre Laplacien de la FIG.6B. Mais selon l'invention ce résultat est obtenu avec une grande économie de temps de calcul.

A la suite de ces deux opérations ou procédures de calcul, on a déterminé des régions de l'image qui fournissent une réponse maximale par ce filtrage, parce qu'elles correspondent à un tronçon de vaisseau dont la direction est parallèle à la direction principale du filtre passe-bas.

On remarquera que le filtre à noyau Laplacien est plus ouvert dans la direction de balayage X'X. Il permet donc dans cet exemple de détecter et classer tous les tronçons de vaisseaux parallèles à cette direction générale.

Pour mettre en évidence l'effet des deux opérations décrites précédemment, la FIG.8A montre la réponse impulsionnelle d'un filtre bidimensionnel passe-bas orienté à 112°5, par rapport à l'axe des X, et la FIG.8B celle du Laplacien de même orientation.

Maintenant, tous les vaisseaux de l'arbre coronarien tel que représenté sur la FIG.3A, et toutes les parties d'un même vaisseau n'ont pas une orientation identique, **par exemple horizontale** pour être détectées par le filtre correspondant à la FIG.7A, d'axe principal horizontal.

Pour résoudre ce problème, outre le filtre bidimensionnel losange de la FIG.7A, on prévoit une batterie de filtres dont chacun est orienté par rapport à la verticale ou l'horizontale d'une manière différente. On peut, en fait, donner à chacun de ces filtres toutes les orientations possibles dans le plan, qui sont repérées par l'angle du grand axe du losange avec l'axe horizontal de l'image, c'est-à-dire la direction des lignes de l'image numérisée. Pour le filtrage, on balaye alors successivement l'image avec chacun des filtres parallèlement à son grand axe et à son petit axe. Il en résulte que le calcul est effectué maintenant comme on l'a dit précédemment, dans le sens causal et anticausal, le long de lignes et de colonnes parallèles aux axes du losange. Un petit problème apparaît du fait que ces axes ne passent pas nécessairement, du fait de leur désorientation, sur des points du réseau de l'image numérisée, point dont la connaissance initiale de l'intensité est nécessaire aux calculs de la fonction de convolution. Cette intensité est dans ce cas déterminée par interpolation à partir de l'intensité des pixels voisins.

Pour l'application au traitement des images angiographiques numériques, un nombre N = 8 directions de filtres sont en général suffisantes.

Ces directions ont été choisies à, par exemple : 0°, 22°5, 45°, 67°5, 90°, 112°5, 135°, 157°5 d'angles par rapport à l'horizontale de l'image numérisée d'origine, c'est-à-dire désorientées régulièrement de $\pi$/N en $\pi$/N.

Un tel ensemble de filtres bidimensionnels en forme de losange est représenté à titre d'exemple sur les FIG.7A à 7H selon toutes les directions de 0° à 157°5, de 22°5 en 22°5. La FIG.7I montre qu'à 180°, le filtrage est le même qu'à 0°.

Il apparaît clairement que la topologie du filtre bidimensionnel en forme de losange tel que décrit plus haut en référence avec la FIG. 7A ne change pas dans cette rotation. Pour chacune des huit orientations définies ci-dessus, on obtient une image filtrée en effectuant 2 itérations (l'une causale, l'autre anticausale) selon l'orientation principale du filtre ; puis en effectuant 2 autres itérations (causale et anticausale) selon l'orientation secondaire perpendiculaire à la première. Les balayages se font selon les huit directions des filtres, en faisant intervenir des valeurs d'intensités obtenues par interpolation si nécessaire. On obtient donc N images filtrées.

Dans chaque image filtrée, les réponses du filtre utilisé permettent de déterminer tous les tronçons de vaisseaux ayant même orientation que l'axe principal de ce filtre, puisque les réponses de ce filtre sont plus grandes lorsque l'objet, c'est-à-dire le tronçon de vaisseau, est aligné avec la direction principale dudit filtre.

**Phase 2** : **détermination des points centraux de chacun des tronçons de vaisseaux**.

Une fois déterminée la direction de chaque tronçon de vaisseau, dans chacune des N images, obtenues par filtrage d'une image telle qu'issue de l'ETAPE 1 par balayage au moyen de chacun des N filtres, comme décrit en Phase 1, on réalise maintenant une troisième opération ou procédure de calcul formant la Phase 2 de l'ETAPE 2. Cette troisième opération consiste à examiner dans chacune de ces N images, l'intensité des pixels calculée au moyen des filtres précédents dans chacun des tronçons retenus, et à rechercher en quel point on a trouvé un minimum local d'intensité lors du balayage par le filtre perpendiculairement à sa direction principale, c'est-à-dire perpendiculairement à la direction du tronçon de vaisseau. Ce minimum local d'intensité dans la direction transversale à la direction du vaisseau correspond au maximum local de réponse en intensité du filtre, et par conséquent correspond au pixel (ou point) situé précisément sur la ligne médiane de ce tronçon de vaisseaux. Ce traitement est appliqué à tous les tronçons de vaisseaux de chaque image résultant du filtrage par chacun des N filtres, de manière à déterminer tous les pixels situés sur les lignes médianes de tous les vaisseaux de l'image telle que celle de la FIG.3A.

Selon l'invention, à l'issue de l'ETAPE 2, mise en oeuvre durant la phase 1 et la phase 2, appliquées sur l'image angiographique de la FIG.3A, le procédé fournit donc "le squelette" de l'arbre coronarien comme illustré par exemple par la FIG.3B, uniquement formé des points, résultant des opérations de traitement précédemment décrites dans cette ETAPE 2, localisés sur les lignes médianes des vaisseaux sanguins. Ce "squelette" est caractérisé par le fait que, en chaque point, la réponse de l'un des filtres utilisés, qui pourraient évidemment être plus nombreux, est maximale. Cela signifie que lors du balayage de l'image au moyen du filtre selon la direction perpendiculaire au grand axe, c'est-à-dire selon son petit axe, la réponse est plus faible de part et d'autre du point retenu comme point de squelette.

On peut considérer que la localisation de ces points est très robuste car elle résulte d'un traitement mathématique homogène appliqué à des points de l'image numérisée d'origine dont l'intensité initiale est une mesure. En recherchant le minimum des intensités dans l'image filtrée, on sélectionne les points centraux et élimine les autres points, comme il apparaît au vu des FIG.3A et 3B.

**ETAPE 3 - Localisation des bords des vaisseaux**.

La localisation des bords des vaisseaux est effectuée image par image, c'est-à-dire sur chacune des N images filtrées prises une à une, contenant les points centraux des tronçons de vaisseaux ayant une direction déterminée. Cette ETAPE correspond au bloc fonctionnel 3 du diagramme de la FIG.2. Plusieurs méthodes sont permises pour mettre en oeuvre cette ETAPE 3. On va citer ci-après deux méthodes possibles.

Dans une première forme de mise en oeuvre, les bords du vaisseau peuvent être déterminés en calculant la dérivée du profil d'intensité perpendiculairement à l'axe de la ligne centrale du vaisseau. Par une opération de regroupement des points de bord par paires, les lignes de bord du vaisseau sont détectées.

Dans une autre méthode de détection des bords du vaisseau, on peut rechercher la corrélation du profil d'intensité transversalement au vaisseau avec des créneaux de différentes largeurs.

Quelle que soit la méthode choisie, la détermination des points de bord est robuste, puisqu'elle se fonde sur la détermination préalable des points centraux qui est robuste.

En outre, quelle que soit la méthode choisie, elle est mise en oeuvre en pratiquant des balayages systématiques selon le nombre N donné de directions, par exemple 8 directions perpendiculairement aux lignes centrales des tronçons de vaisseaux dans les N imges. Elle est complètement automatisable. Elle n'a pas besoin d'être guidée.

La FIG.9A montre schématiquement le résultat du traitement d'une image numérique telle qu'issue de l'ETAPE 1. D'abord, est appliqué à cette image, un filtrage selon la Phase 1 de l'ETAPE 2, qui met en oeuvre le balayage de cette image au moyen d'un filtre losange 7c incliné à 45°, tel que représenté sur la FIG.7C, ou du filtre Laplacien correspondant. Cette procédure de calcul fournit une image filtrée, correspondant à l'orientation du filtre utilisé, dans laquelle sont détectés tous les tronçons de vaisseaux ayant pour axe une direction parallèle à la direction principale du filtre 7c. Ensuite est appliquée à cette image filtrée la procédure de calcul selon la Phase 2 de l'ETAPE 2 qui permet de sélectionner les points de centre des vaisseaux comme les maxima de réponse des filtres perpendiculairement à leur direction principale. Enfin est appliquée à cette image filtrée, dans laquelle les points de centre viennent ainsi d'être localisés, la procédure de calcul selon l'ETAPE 3, qui permet de déterminer les largeurs de vaisseaux au niveau de chaque point de centre.

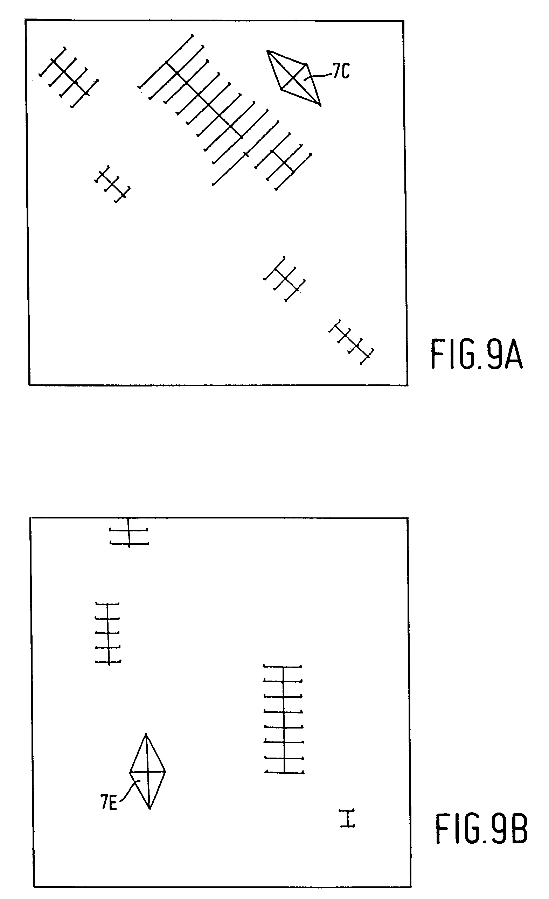

La FIG.9B, illustre les mêmes opérations et résultats obtenus à partir de la même image numérique d'origine, telle qu'issue de l'ETAPE 1, par exemple comme représenté FIG.3A, ayant cette fois été traitée dans l'ETAPE 2 par balayage au moyen de filtres losange 7e ou Laplacien, d'axe principal vertical, comme représenté sur la FIG.7E. Ces résultats consistent, après les ETAPES 2 et 3, en une image filtrée fournissant la localisation des points de centres des tronçons de vaisseaux verticaux et leurs largeurs locales.

La mise en oeuvre des ETAPES 2 et 3 avec chacun des N filtres d'orientations différentes fournit une image filtrée, montrant les points de centre et les largeurs locales des tronçons de vaisseaux ayant l'orientation du filtre particulier.

La FIG.3B est donc une image reconstruite après l'ETAPE 2, à partir des données de ces N images filtrées, pour montrer le squelette de tous les vaisseaux.

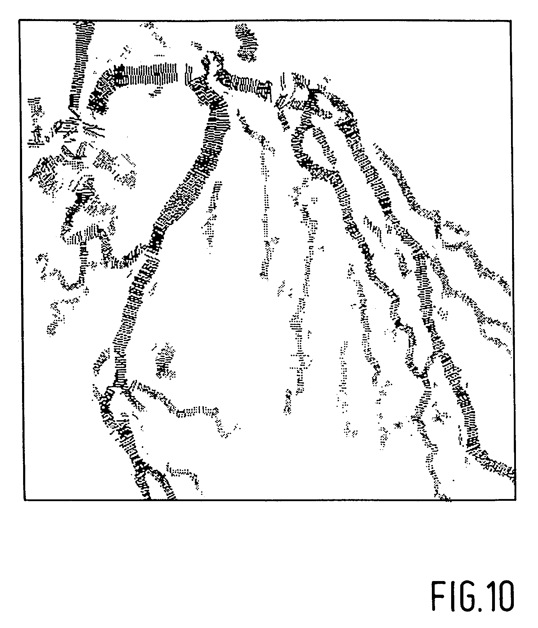

La FIG.10, est quant à elle une image reconstruite après l'ETAPE 3, à partir des données de ces N images filtrées pour montrer les largeurs locales de tous les vaisseaux.

La gravité des sténoses est ensuite déterminée. A cet effet, une fois déterminés les bords du vaisseau on localise des régions où il existe des rétrécissements des vaisseaux et on examine les profils d'intensité dans ces régions. A ce moment une décision est prise pour indiquer si le rétrécissement correspond réellement à une anormalité.

Comme on l'a dit précédemment, l'invention peut aussi être appliquée à la détermination des contours d'autres objets en forme de rubans contrastant sur un fond que l'on peut obtenir sensiblement uniforme au moyen d'un traitement selon l'ETAPE 1.

**Revendications**

1. Procédé de traitement d'une image numérique comprenant la représentation d'objets en forme de rubans aynt des intensités sensiblement uniformes contrastant sur un fond sensiblement uniforme, ce procédé comprenant au moins une étape d'identification des pixels situés sur les lignes centrales des objets, dite étape de "tracking",
caractérisé en ce que cette étape comprend une première opération de filtrage menée à bien en appliquant sur chaque image une série de N filtres sélectifs bidimensionnels rècursifs passe-bas, à support losange, dont une des directions principales est orientée régulièrement dans le plan de l'image de $\pi/N$ en $\pi/N$, pour déterminer la direction de chaque tronçon d'objet en forme de rubans comme celle où la réponse d'un des filtres est maximale.

2. Procédé selon la revendication 1 caractérisé en ce que, pour améliorer la sélectivité du filtrage précédent, l'étape de tracking comprend une seconde opération menée à bien en soustrayant, à l'intensité de chaque pixel, une fraction de l'intensité d'un pixel situé à une distance donnée transversalement à sa gauche par rapport à la direction principale du filtre passe-bas qui donne la réponse maximale et une même fraction de l'intensité d'un pixel situé à la même distance à sa droite, ces première et seconde opérations étant équivalentes à l'application sur chaque image, d'une série de N filtres bidimensionnels Laplaciens de mêmes directions principales que les N filtres récursifs passe-bas précédents.

3. Procédé selon l'une des revendications 1 ou 2, caractérisé en ce que l'étape de "tracking" comprend une troisième opération d'identification des points des lignes centrales des objets en forme de ruban par la détermination des maxima locaux de réponse en intensité des filtres, transversalement aux directions des objets déterminées par les filtrages des deux premières opérations.

4. Procédé selon l'une des revendications 1 à 3, caractérisé en ce que les paramètres des filtres sont choisis pour obtenir une plus grande sélectivité dans une des directions principales.

5. Procédé selon l'une des revendications 1 à 4, caractérisé en ce que l'étape de "tracking" est précédée d'une étape d'extraction du fond.

6. Procédé selon la revendication 5, caractérisé en ce que l'étape d'extraction du fond est menée à bien par une méthode de fermeture morphologique pour déterminer l'enveloppe supérieure des profils d'intensité dans l'image, cette enveloppe permettant d'évaluer le fond de l'image, qui est ensuite soustrait de l'image, pour que, à la suite de cette soustraction, l'image ne contienne que les objets en forme de ruban contrastants sur un fond sensiblement uniforme.

7. Procédé selon l'une des revendications 3 à 6, caractérisé en ce qu'il comprend en outre une étape d'extraction du contour des objets en forme de rubans, à partir de la localisation de leurs points centraux.

8. Procédé selon la revendication 7, caractérisé en ce les pixels des bords des objets en forme de ruban sont extraits par une méthode de corrélation des profils d'intensité perpendiculairement à l'axe de la ligne centrale de l'objet en forme de ruban, avec des créneaux.

9. Procédé selon l'une des revendications précédentes, caractérisé en ce que le nombre N des filtres récursifs passe-bas bidimensionnels est 8, et que leurs directions principales sont orientées de 22°5 en 22°5.

FIG.1

FIG.2

FIG.4

FIG. 3A

FIG. 3B

FIG.5A

FIG.5B

FIG.5C

FIG.6A

FIG.6B

FIG.7A    FIG.7B    FIG.7C

FIG.7D    FIG.7E    FIG.7F

FIG.7G    FIG.7H    FIG.7I

FIG.8A    FIG.8B

FIG.9A

FIG.9B

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PROCEEDINGS OF THE ANNUAL INTERNATIONAL CONFERENCE OF THE IEEE ENGINEERING IN MEDICINE AND BIOLOGY SOCIETY, NEW-ORLEANS(US) '4-7 November 1988' , GERLOT ET AL: , P.432-433 * the whole document * | 1,5,6 | G06T7/00 H04N5/32 |
| A | PATTERN RECOGNITION LETTERS, vol.8, no.5, December 1988, AMSTERDAM NL pages 353 - 358 COLLOREC ET AL 'Vectorial tracking and directed contour finder for vascular network in digital subtraction angiography' * the whole document * | 1 | |
| A | COMPUTERS IN CARDIOLOGY, BOSTON(US),7-10 OCTOBER 1986 'SUN ET AL:"A HIERARCHICAL SEARCH ALGORITHM FOR IDENTIFICATION OF CORONARY ARTERY CONTOURS IN DIGITAL ANGIOGRAMS",P.583-586' * the whole document * | 1 | |
| A | DE-A-36 17 126 (ELSCINT) * the whole document * | 8 | TECHNICAL FIELDS SEARCHED (Int.Cl.6) G06F H04N |
| A,D | IEEE TRANSACTIONS ON MEDICAL IMAGING, vol.8, no.1, March 1989, NEW YORK US pages 78 - 88 SUN 'AUTOMATED IDENTIFICATION OF VESSEL CONTOURS IN CORONARY ARTERIOGRAMS BY AN ADAPTIVE TRACKING ALGORITHM' | | |

The present search report has been drawn up for all claims

| Place of search | Date of completion of the search | Examiner |
|---|---|---|
| THE HAGUE | 30 September 1994 | Yvonnet, J |

EPO FORM 1503 03.82 (P04C01)